## Europäisches Patentamt

## European Patent Office

## Office européen des brevets

(19)

(11) Numéro de publication: **0 089 968**
**B1**

(12)

# FASCICULE DE BREVET EUROPÉEN

(45) Date de publication du fascicule du brevet:
**08.06.88**

(51) Int. Cl.⁴: **B 01 D 17/04, C 02 F 1/40**

(21) Numéro de dépôt: **82902736.6**

(22) Date de dépôt: **27.09.82**

(86) Numéro de dépôt international:
**PCT/FR 82/00157**

(87) Numéro de publication internationale:
**WO 83/01207 (14.04.83 Gazette 83/09)**

(54) **PROCEDE ET DISPOSITIF DE CASSAGE D'EMULSION A L'AIDE DE POLYELECTROLYTES.**

(30) Priorité: **30.09.81 FR 8118378**
**24.09.82 FR 8216172**

(43) Date de publication de la demande:
**05.10.83 Bulletin 83/40**

(45) Mention de la délivrance du brevet:
**08.06.88 Bulletin 88/23**

(84) Etats contractants désignés:
**DE FR GB SE**

(56) Documents cité:
**EP-A-0 032 610**
**DE-A-2 206 748**
**FR-A-1 345 193**
**FR-A-2 130 579**
**FR-A-2 205 907**
**US-A-3 956 117**

**Ind. Eng. Chem. Prod. Res. Dev., volume 18, no. 1, March 1979 (Washington, US), N.D. Sylvester "Polyelectrolyte flocculation of oil-water emulsions" pages 57-61, see page 57, column 2, line 1 - page 58, column 1, line 52; page 58, column 2, line 49 - page 59, column 1, line 5**

(73) Titulaire: **GRUET, William, 24 Village de Grasse, F-78810 Feucherolles (FR)**

(72) Inventeur: **GRUET, William, 24 Village de Grasse, F-78810 Feucherolles (FR)**

## Description

Le procédé et le dispositif présentés ici concernent le cassage des émulsions huile dans l'eau à l'aide de réactifs polyélectrolytiques et, plus généralement, le traitement d'eaux dont on veut extraire une phase insoluble (qui sera appelée huileuse, qui ne se décante pas d'elle même du fait qu'elle est stabilisée par des agents tensio-actifs.

Dans les traitements connus de ce genre, les réactifs polyélectrolytiques, stockés sous forme de poudre en général, sont dissous une première fois dans l'eau. Le réactif ainsi mis sous une forme liquide, est dissous dans l'émulsion ou l'eau à traiter. Une agitation est maintenue jusqu'à ce que les charges ioniques des tensio-actifs soient neutralisées par les charges de signe opposé des réactifs. A ce moment-là, la phase huileuse peut se décanter.

Ces procédés présentent l'inconvénient d'être très longs. La décantation, d'autant plus longue que la densité de la phase à extraire est plus proche de celle de l'eau, peut être accélérée par des méthodes telles que centrifugation, flottation, qui nécessitent alors des installations coûteuses.

Par ailleurs, il peut arriver qu'un excès de réactif restabilise l'émulsion; le dosage de réactif doit donc être précis, ajustable en fonction de la concentration de l'émulsion, ce qui pose des problèmes techniques de réalisation.

Le procédé, qui va être décrit, ne présente pas ces inconvénients. L'invention concerne un procédé de traitement d'eaux résiduaires ou de distribution dont on veut séparer une phase insoluble huileuse dispersée et stabilisée dans l'eau par des agents tensio-actifs (émulsion huile-en-eau ), dans lequel une solution de réactif(s) de type polyélectrolytique de poids moléculaire élévé est introduite dans le milieu à traiter, caracterisé par le mode opératoire qui consiste dans un premier temps à agiter l'émulsion et à introduire la solution de réactif, en concentration c donnée, de manière à ce que la phase huileuse à extraire précipite sous la forme de filaments, puis dans un deuxième temps, à rassembler le précipité en enroulant les filaments autour d'un élément d'extraction ou sur eux-mêmes, leur rassemblement formant une masse huileuse qui, dans un troisième temps, est séparée de l'eau.

L'invention concerne également un dispositif pour la mise en oeuvre dudit procédé constitué d'une cuve recevant l'eau à traiter, pourvue d'un moyen d'agitation et d'un moyen d'injection de solution de réactif, caractérisé en ce qu'il est pourvu d'une hélice multipale qui, en plus de sa contribution à l'agitation du milieu, capte les filaments et les enroule autour de son axe d'entraînement, ledit axe étant muni d'un dispositif permettant d'évacuer le précipité de l'axe.

Dans le procédé de l'invention, les polyélectrolytes sont dissous à l'avance dans de l'eau (cette dissolution est assez longue et prend quelques dizaines de minutes).

Il faut préciser ici une propriété des solutions de cette catégorie, car elle interviendra dans ce qui suit. Les polyélectrolytes utilisés sont des polymères de haut poids moléculaire; dissous dans de l'eau, il confèrent à la solution obtenue des propriétés physiques trés différentes de celles d'un liquide newtonien; notamment, ils créent dans le liquide des forces de tension et lui donnent la propriété de faire des fils (ou des filaments). Ceci s'observe par exemple lorsque l'on retire un bâtonnet de téflon d'un bécher contenant une telle solution de polyélectrolyte. Il se crée un fil allant du bâtonnet à la surface de la solution. Ce fil peut atteindre dix centimètres ou davantage avant de casser. Lorsque l'on introduit une telle solution de polyélectrolytes à une concentration convenable, dans une émulsion à casser, avec une agitation appropriée, on obtient, au bout de quelques minutes, que la phase huileuse à séparer se trouve sous forme de filaments tournant autour de l'axe de l'hélice ou de la turbine de l'agitateur.

L'explication est vraisemblablement la suivante: lorsque la solution de réactif est introduite dans l'émulsion, elle ne se dissout pas instantanément. L'émulsion est agitée d'une façon régulière, par exemple, par une turbine ou une hélice ne tournant pas trop vite pour que l'écoulement de l'émulsion dans la cuve de traitement ne soit pas turbulent, et que les courbes de vitesse constante soient des cercles concentriques axés sur l'axe de l'agitateur. La phase constituée par la solution de réactif est étirée en filaments par les forces de viscosité du liquide agité au fur et à mesure qu'elle est introduite.

Les miscelles d'huile viennent alors très rapidement s'adsorber sur ces filaments, du fait des forces dues aux charges ioniques des tensio-actifs, de signe opposé aux charges des polyélectrolytes. Ces filaments s'allongent au point de présenter une surface d'adsorption importante qui va capter toute la phase huileuse à extraire.

Lorsque l'agitation est trop forte, les filaments sont coupés en petites particules, très longues à décanter. Lorsque l'agitation est insuffisante, les filaments ne se forment pas.

Les polyélectrolytes doivent être sélectionnés en fonction de la nature de l'émulsion à traiter; la concentration de la solution de réactif est telle que la viscosité, la tension dans le liquide, les propriétés physiques en général, permettent cette mise en filaments de la phase huileuse. Elle doit être déterminée expérimentalement. Cette concentration n'a pas à être très précise pour assurer un bon fonctionnement; l'expérience montre qu'elle peut varier dans un rapport de plus du simple au double; un exemple précis sera donné plus loin.

Le fait d'introduire un excès de solution de réactif dans l'émulsion à traiter n'entraîne pas de réémulsion de la phase huileuse.

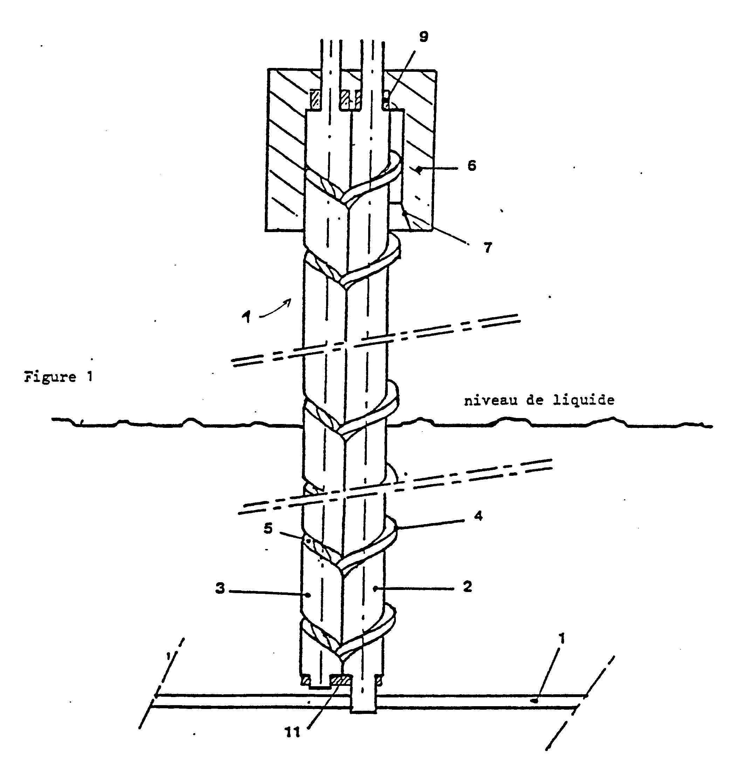

L'intérêt de cette répartition en filaments de la phase huileuse est que ceux-ci peuvent être captés rapidement par une simple hélice multipale (1), qui va les enrouler autour de son axe d'entraînement. Le sens du pas de l'hélice et le sens de rotation sont tels que le liquide est aspiré au dessous de l'hélice et refoulé au dessus, où se trouve l'axe d'entraînement. Les filaments en s'enroulant sur l'axe forment une boue visqueuse, élastique et insoluble qu'il s'agit maintenant de sortir de la cuve de traitement. La figure 1 représente un dispositif remplissant parfaitement cette fonction.

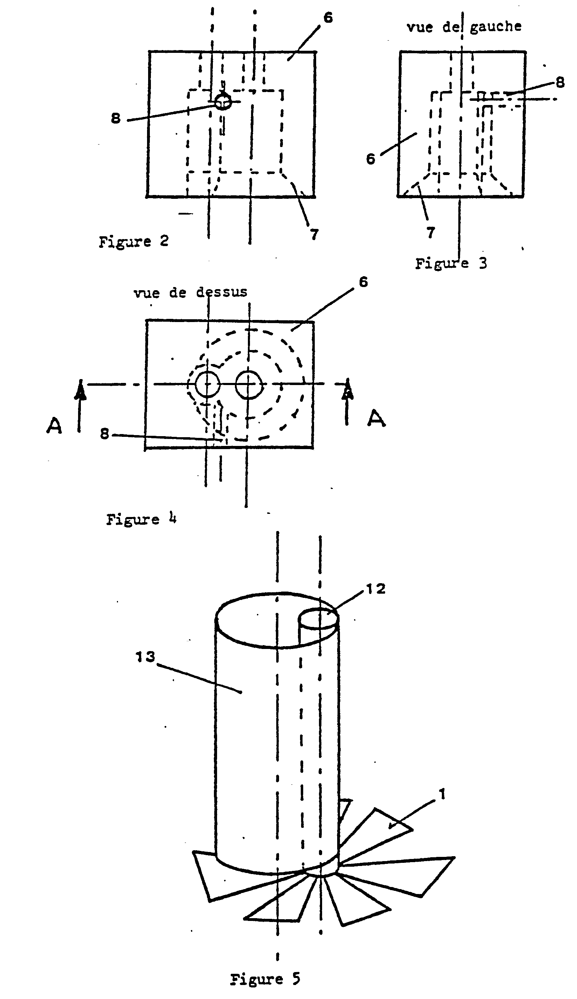

Il comprend une hélice multipale (1) qui sert à capter les filaments comme cela vient d'être expliqué. L'axe d'entraînement est un cylindre (2) sur lequel s'appuie un contre-cylindre (3). Ces deux cylindres tournent en sens inverse sur leur axe respectif et ceci suffirait à faire remonter la boue du fait de la viscosité de celle-ci. En fait, il vaut mieux prévoir une hélice (ou pas de vis) sur chacun des deux cylindres de manière à ce que ces vis, l'une mâle (4) et l'autre femelle (5), s'engrennent l'une dans l'autre. En tournant, les vis vont faire remonter la boue jusqu'à la surface de l'émulsion en cours de traitement, puis au dessus de la surface jusqu'au corps de la pompe (6). L'émulsion, elle, n'est pas remontée par les vis. La pièce (6) est semblable à un corps de pompe à vis, à la différence près que les vis (4) et (5) sortent au dessous du corps de la pompe. La boue est refoulée dans la tuyauterie (8) représéntée sur la figure 4, qui montre la pièce (6) vue de dessus. Un autre dispositif semblable peut être obtenu si le contre-cylindre (13), au lieu d'être à côté du cylindre (12), est extérieur au cylindre (12) comme le montre la figure 5.

La vis du contre-cylindre (si on en utilise une) doit se trouver alors à l'intérieur du contre cylindre (13) comme dans le cas d'une denture intérieure pour un engrenage et les deux cylindres tournent alors dans le même sens.

Le procédé et le dispositif décrits, ainsi que la variante du dispositif, peuvent permettre un fonctionnement en continu, ou par lots, selon la conception de l'installation. Dans le cas d'un fonctionnement par lots dans une seule cuve de traitement, l'hélice de l'extracteur peut servir d'hélice d'agitation dans la première partie du procédé ("mise en filaments").

A la base du corps de pompe (6), il est préférable de prévoir un chanfrein intérieur (7) sur l'entrée de la vis mâle dans le cas où la boue arrive par gros paquet, ce qui évite un bourrage à cet endroit.

La boue refoulée dans la tuyauterie (8) peut être envoyée dans un décanteur; on sépare ainsi une phase aqueuse contenant l'excès de réactif qui peut alors être réutilisé. Le procédé et le dispositif décrits peuvent être reproduits en utilisant par exemple le réactif commercialisé par la Société Hoechst sous le nom commercial: Bozefloc C200®; ce réactif en poudre est dissous dans de l'eau à une concentration de l'ordre de 1,5 pour cent (en poids). Une hélice de huit pales d'un diamétre de 22 cm avec un pas de 15 cm, pour une cuve de traitement de 35 cm de diamètre et une hauteur de liquide de 50 cm, tournant à 300 tours/minute donne de bons résultats pour la formation de filaments et leur extraction.

Dans le cas où l'émulsion est une huile de coupe de machine-outil à 5 % (en poids) de concentration, la quantité de solution de réactif à utiliser est de l'ordre de 5 % (en poids) par rapport à la quantité d'émulsion. Le temps de traitement (sans tenir compte du remplissage et de la vidange de la cuve de traitement) est de l'ordre de quelques minutes, temps qui peut être éventuellement prolongé sans inconvénient.

Les figures 2, 3 et 4 représentent la pièce (6) de face, de gauche, et en vue de dessus. Sur la figure 1, la pièce (6) est coupée suivant AA (figure 4).

Sur la figure 1, le système mécanique d'entraînement des cylindres (2) et (3) n'est pas représenté. Seuls les joints (9) ainsi qu'une pièce (11) à la base des cylindres, qui n'est pas indispensable mais qui donne une meilleure rigidité mécanique à l'ensemble, sont représentés. Il faut aussi préciser que ce qui est appelé pompe à vis dans le texte qui précède, est souvent appelé aussi pompe à engrenages (engrenages hélicoïdaux). Enfin, les cylindres (2) et (3) peuvent être verticaux; ils peuvent aussi être inclinés de manière à faciliter la remontée de la masse huileuse vers la pompe à vis.

Les dispositifs précédents nécessitent un système mécanique pour enrouler les filaments sur un axe, et les extraire hors de l'eau.

Le procédé de cassage d'émulsion peut être aussi mis en oeuvre par un dispositif ne nécessitant pas de pièce mécanique en mouvement.

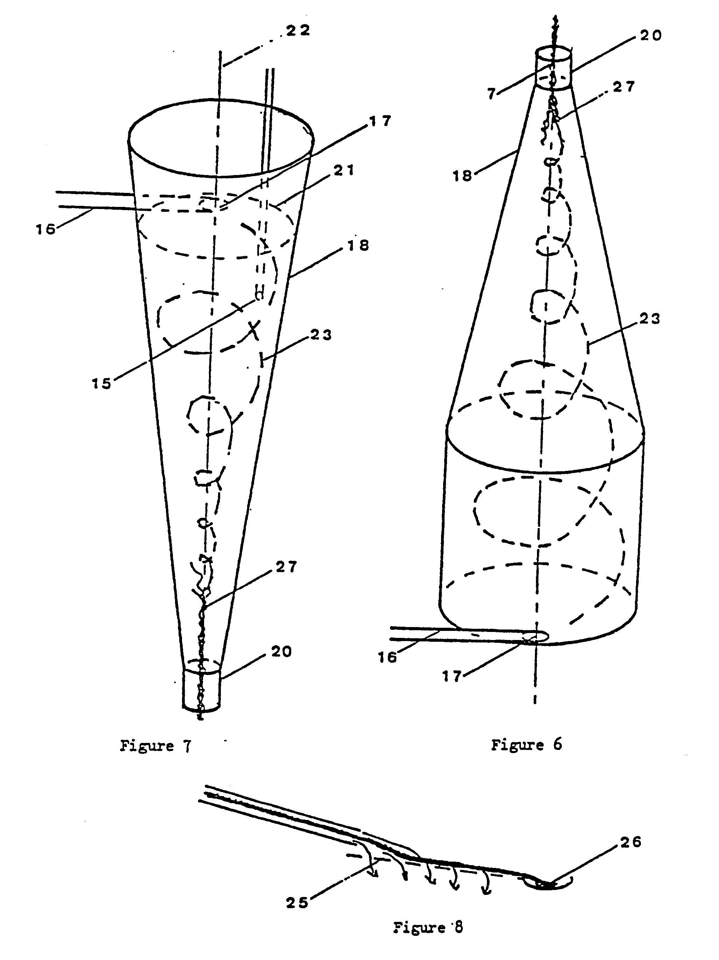

On sait qu'un liquide, dans un récipient ou une cuve, peut être animé d'un mouvement de rotation important de par son propre écoulement, sans agitateur mécanique. Considérons par exemple, figure 7, une cuve conique de révolution (18) remplie de liquide jusqu'au niveau (21), s'écoulant par l'orifice (20). Le fait que le liquide arrive tangentiellement par la tuyauterie (16) avec une certaine vitesse, et qu'il ressorte par l'orifice (20) sur l'axe de la cuve, engendre un mouvement de rotation du liquide autour de l'axe (22) de la cuve, avec une vitesse fonction du débit. L'écoulement peut aussi se faire de bas en haut (figure 6), en quel cas la cuve est fermée totalement; l'axe de la cuve peut aussi ne pas être vertical.

On sait que dans ces conditions, la vitesse de rotation (en tours par seconde) des particules de liquide est beaucoup plus rapide vers l'axe de rotation que vers les parois de la cuve.

En déterminant convenablement les paramètres de fonctionnement que sont le choix du (des) réactif(s) polyélectrolytique(s), la concentration de la solution de réactifs, le mode d'injection de cette solution dans l'émulsion, l'agitation de l'émulsion déterminée par la géométrie et les dimensions de la cuve (18) et le débit, on parvient à réaliser la précipitation des miscelles d'huile sous forme de filaments.

D'autre part, l'eau, en même temps qu'elle descend dans la cuve (18), est animée d'un mouvement de rotation, tel que la vitesse de rotation est plus rapide lorsque l'on se déplace de la paroi de la cuve vers l'axe de rotation du liquide, qui est l'axe de symétrie de la cuve. Cette répartition du champ des vitesses est suffisante pour provoquer l'enroulement des filaments. Les filaments ont tendance à former des arcs de cercle centrés sur l'axe de rotation (22), et tournent en se rapprochant de l'axe (22). Si la hauteur de la cuve est suffisante, tous les filaments atteignent l'axe de rotation (22), puis se rassemblent et constituent la masse huileuse (27) qui est entraînée avec l'eau, vers l'orifice de sortie (20).

Les figures 6 et 7 montrent schématiquement une trajectoire (23) de filament depuis sa création près de l'injecteur de solution de réactif, jusqu'à ce qu'il rejoigne l'axe (22) où il s'agglomère à d'autres filaments pour former la masse huileuse (27) sur l'axe (22), qui s'écoule avec l'eau par la sortie (20) de la cuve.

La masse huileuse (27) et l'eau, issues de la cuve (18) peuvent ensuite être séparées en coulant sur une grille inclinée (25). La masse huileuse, de par ses caractéristiques physiques, ne traverse pas la grille, contrairement à l'eau, et est récupérée de l'autre côté (26) de la grille.

Le procédé peut être utilisé dans le cas de traitement d'eau contenant des tensio-actifs seuls ou maintenant en équilibre des produits insolubles ou peu solubles. On rencontre ces cas à propos des rejets de nombreuses industries, par exemple, l'industrie mécanique (émulsion d'huile soluble, eaux de lavage, de refroidissement, usées) et l'industrie chimique.

Le procédé peut être utilisé aussi pour le traitement des eaux résiduaires urbaines en vue de revaloriser les résidus obtenus, ou pour le traitement des eaux de distribution.

**Revendications**

1. Procédé de traitement d'eaux résiduaires ou de distribution dont on veut séparer une phase insoluble huileuse dispersée et stabilisée dans l'eau par des agents tensio-actifs (émulsion huile-en-eau ), dans lequel une solution de réactif(s) de type polyélectrolytique de poids moleculaire élévé est introduite dans le milieu à traiter, caractérisé par le mode opératoire qui consiste dans un premier temps à agiter l'émulsion et à introduire la solution de réactif, en concentration c donnée, de manière à ce que la phase huileuse à extraire précipite sous la forme de filaments, puis dans un deuxième temps, à rassembler le précipité en enroulant les filaments autour d'un élément d'extraction ou sur eux-mêmes, leur rassemblement formant une masse huileuse qui, dans un troisième temps est séparée de l'eau.

2. Procédé permettant la précipitation de la phase à extraire sous forme de filaments selon la revendication 1, dans lequel l'émulsion à traiter est introduite dans une cuve (18) d'axe de révolution (22) par l'orifice (16), et évacuée par l'orifice (20), les deux orifices étant placés et orientés de manière à ce que l'écoulement de l'eau à travers la cuve engendre un mouvement de rotation de cette eau autour de l'axe (22), ladite cuve étant munie d'un dispositif d'injection de réactif (15), caracterisé par le fait que le mouvement de rotation de l'eau permet la précipitation de la phase à extraire sous forme de filaments.

3. Procédé selon la revendication 1 dans lequel la masse huileuse (27) ainsi que l'eau sortant ensemble de la cuve (18) sont envoyées sur une grille (25), caractérisé par le fait que l'eau passe à travers les espaces de la grille tandis que la masse huileuse reste sur la même face de la grille et est recuperée sur le bord (26).

4. Procédé selon la revendication 1, caractérisé par le fait que la masse huileuse, séparée de l'eau, est décantée de manière à récupérer, dans la phase aqueuse, une partie du réactif utilisé.

5. Dispositif pour la mise en oeuvre du procédé selon la revedication 1, constitué d'une cuve recevant l'eau à traiter, pourvue d'un moyen d'agitation et d'un moyen d'injection de solution de réactif, caractérisé en ce qu'il est pourvu d'une hélice multipale (1) qui, en plus de sa contribution à l'agitation du milieu, capte les filaments et les enroule autour de son axe d'entraînement (2 et 12), ledit axe étant muni d'un dispositif (2, 3, 12, 13) permettant d'évacuer le précipité de l'axe.

6. Dispositif selon la revendication 5 caractérisé par le fait que l'axe d'entraînement de l'hélice (1) est constitué par un cylindre sur lequel tourne un contre-cylindre (3) en sens contraire qui permet, en écrasant les boues que forme le précipité, de les déplacer le long des cylindres (2) et (3).

7. Dispositif selon la revendication 6, caractérisé par le fait que sur la surface du cylindre (2) et du contre-cylindre (3) se trouvent deux hélices (4) et (5) qui s'engrènent l'une avec l'autre lorsqu'elles tournent, faisant ainsi remonter la masse huileuse captée par l'hélice (1).

8. Dispositif selon la revendication 7, caractérisé par la présence d'une pompe à vis, constituée desdites deux vis ou hélices (4) et (5). et d'un corps de pompe (6) qui, situé en haut des hélices (4) et (5), au dessus de la surface du liquide, refoule la masse huileuse dans le tuyau (8).

9. Dispositif selon la revendication 8, caractérisé par le fait qu'à la base du corps de pompe (6) à la sortie des vis (4) et (5) se trouve un chanfrein intérieur (7) pour éviter les risques de bourrage.

10. Dispositif selon la revendication 5, caractérisé par le fait que l'axe de l'hélice est un cylindre (12) à l'extérieur duquel tourne, dans le même sens, le contre-cylindre (13).

11. Dispositif selon la revendication 10, caractérisé par le fait que sur la face extérieure du cylindre (12) et sur la surface intérieure du cylindre (13) se trouvent des hélices qui s'engrenent l'une avec l'autre.

**Patentansprüche**

1. Verfahren zur Behandlung von Ab- und Leitungswässern, von welchen man eine unlösliche, dispersierte, durch Tenside im Wasser stabilisierte Phase (Öl-in-Wasser-Emulsion), trennen möchte. Bei diesem Verfahren wird eine Reagens/ Reagenzienlösung polyelektrolytischer Art mit hohem Molekulargewicht dem zu behandelnden Medium zugeführt. Es ist durch eine Methode gekennzeichnet, die darin besteht, die Emulsion zunächst so in Bewegung zu versetzen und die Reagenslösung mit jener Konzentration c zuzuführen, daß sich die zu extrahierende ölhältige Phase fadenförmig niederschlägt, danach den Niederschlag durch Aufwicklung der Fäden um ein Extraktionselement oder um sie selbst zu ballen und die dadurch gebildete ölhältige Masse schließlich vom Wasser zu trennen.

2. Verfahren, das den Niederschlag der zu extrahierenden Phase in Form von Fäden gemäß Patentanspruch 1 ermöglicht, bei welchem die zu behandelnde Emulsion durch Öffnung (16) in eine Wanne (18) mit Drehachse (22) eingeleitet und bei Öffnung (20) abgeleitet wird, wobei die beiden Öffnungen so angeordnet und ausgerichtet sind, daß das Wasser mit seiner Fließbewegng durch die Wanne eine Drehbewegung um die Achse (22) erzeugt, wobei die Wanne mit einer Reagenseinspritzvorrichtung (15) ausgestattet ist. Das Verfahren ist dadurch gekennzeichnet, daß die Drehbewegung des Wassers den Niederschlag der zu extrahierenden Phase in Form von Fäden ermöglicht.

3. Verfahren nach Patentanspruch 1, bei welchem die aus der Wanne (18) zusammen mit dem Wasser ausfließende ölige Masse (27) auf einen Rost (25) abgeleitet werden, und das dadurch gekennzeichnet ist, daß das Wasser durch die Freiräume des Rostes fließt, während die ölige Masse auf der gleichen Gitterseite bleibt, und am Rand (26) aufgefangen wird.

4. Verfahren nach Patentanspruch 1, das dadurch gekennzeichnet ist, daß die vom Wasser getrennte ölige Masse dekantiert wird, sodaß in der wässrigen Phase ein Teil des verwendeten Reagens zurückgewonnen werden kann.

5. Vorrichtung zur Durchführung des Verfahrens nach Patentanspruch 1, bestehend aus einer für das zu behandelnde Wasser bestimmten Wanne, die mit einem Rührwerk und einer Reagenseinspritzvorrichtung ausgestattet ist. Die Vorrichtung ist dadurch gekennzeichnet, daß sie mit einer mehrblättrigen Helix (1) versehen ist, die nicht nur zur Bewegung des Mediums beiträgt, sondern auch die Fäden aufnimmt und um ihre Antriebsachse (2) und (12) wickelt, wobei diese Achse mit einer Vorrichtung (2, 3, 12 und 13) zur Evakuierung des Niederschlags an der Achse ausgestattet ist.

6. Vorrichtung nach Patentanspruch 5, die dadurch gekennzeichnet ist, daß die Antriebsachse der Helix (1) aus einem Zylinder besteht, auf welchem sich ein Gegenzylinder (3) in entgegengesetzte Richtung dreht, welcher es ermöglicht den vom Niederschlag gebildeten Schlamm durch Plattdrücken entlang der Zylinder (2) und (3) zu verlagern.

7. Vorrichtung nach Patentanspruch 6, die dadurch gekennzeichnet ist, daß sich auf der Oberfläche des Zylinders (2) und des Gegenzylinders (3) zwei Helizes (4) und (5) befinden, die beim Drehen ineinandergreifen, und dadurch die von der Helix (1) aufgenommene ölhältige Masse nach oben befördern.

8. Vorrichtung nach Patentanspruch 7, die dadurch gekennzeichnet ist, daß eine Schraubenpumpe vorhanden ist, bestehend aus den beiden Schrauben bzw. Helizes (4) und (5) und einem Pumpengehäuse (6), welches sich an den beiden Helizes (4 und 5) oben und über der Oberfläche der Flüssigkeit befindet, und die ölhältige Masse in die Rohrleitung (8) drängt.

9. Vorrichtung nach Patentanspruch 8, die dadurch gekennzeichnet ist, daß sich am Fuß des Pumpengehäuses (6) beim Austritt der Schrauben (4) und (5) eine Innenabschrägung (7) befindet, um die Gefahr eines Staus zu verhindern.

10. Vorrichtung nach Patentanspruch 5, die dadurch gekennzeichnet ist, daß die Achse der Helix einen Zylinder (12) darstellt, außerhalb dessen sich ein Gegenzylinder (13) in die gleiche Richtung dreht.

11. Vorrichtung nach Patentanspruch 10, die dadurch gekennzeichnet ist, daß sich an der Außenseite des Zylinders (12) und an der Innenfläche des Zylinders (13) Helizes befinden, die ineinandergreifen.

**Claims**

1. Method for treating waste and distribution waters which an unsoluble oily phase spread and stabilised with surfactants (oil-in-water emulsion) has to be removed from, according to which a solution of high molecular weight polyelectrolytic type reactants is introduced into the water to be treated, caracterised by the operating procedure consisting, in a first time, in agitating the emulsion and introducing the reactant solution with a given concentration C, in such a way that the only phase to be removed precipitates into filaments, and in a second time, to gather the precipitate by spinning the filaments around an extraction element or around themselves, the agglomerating creates an oily mass that, in a third time, is removed from the water.

2. Method to precipitate into filaments the phase to be extracted, as claimed in claim 1, in which the emulsion to be treated is introduced into a vat (18) with a revolution axle (22) by the orifice (16), and evacuated by the orifice (20), both holes being placed and directed in such a way that the flow of water through the vat creates a revolution movement of this water around the axle (22), this vat being equipped with a device to inject the reactant (15), caracterised by the fact that the revolution movement of water allows that the phase to be extracted may be removed into filaments.

3. Method as claimed in claim 1, in which the oily mass (27) and the water flowing together out of the vat (28) are sent on a grid (25), caracterised by the fact that the water passes through the spaces of the grid while the oily mass remains on the same side of the grid and is recovered on the edge (26).

4. Method as claimed in claim 1, caracterised by the fact that the oily mass separated from water, decants in order to recover in the aqueous phase a part of the reactant utilised.

5. Device for implementing the process, as claimed in claim 1, which consists of a vat containing the water to be treated, equipped with a device for agitating, and a device for injecting the reactant solution, caracterised by the fact that it is equipped with a multiblade screw (1) which, in addition to its contribution in the agitation of the water, catches the filaments, and spins them around its axle (2) and (12), this axle being equipped with a device (2, 3, 12, 13) that allows to remove the precipitate from the axle.

6. Device, as claimed in claim 5, caracterised by the fact that the axle of the screw (1) is a cylinder (2) on which a counter-cylinder rotates in opposite direction which enables, by crushing the muds forming the precipitate, to move them along the cylinders (2) and (3).

7. Device, as claimed in claim 6, caracterised by the fact that on the surface of the cylinder (2) and of the counter-cylinder (3), are located two screws (4) and (5) which mesh with one another when rotating, in order to lift up the oily mass, caught by the screw (1).

8. Device, as claimed in claim 7, caracterised by the presence of a screw pump, made up with both screws or helices (4) and (5), and the casing of a pump (6) which, located on top of screws (4) and (5), above the surface of the liquid, forces the oily mass through the pipe.

9. Device, as claimed in claim 8, caracterised by the fact that at the bottom of the pump casing (6) at the exit of the screws (4) and (5) is located an inside chanfrein in order to avoid the risks of cramming.

10. Device as claimed in claim 5, caracterised by the fact that the axle of the screw is a cylinder (12) outside which the counter-cylinder (13) rotates in the same direction.

11. Device as claimed in claim 10, caracterised by the fact that on the external side of the cylinder (12) and on the internal side of the counter-cylinder (13) are located helices that mesh one with another.

Figure 1

niveau de liquide

Figure 2

vue de gauche

Figure 3

vue de dessus

Figure 4

Figure 5

3

Figure 7

Figure 6

Figure 8